# EUROPÄISCHE PATENTSCHRIFT

(11) **EP 2 374 372 B1**
(45) Veröffentlichungstag und Bekanntmachung des Hinweises auf die Patenterteilung: **27.03.2013**
(21) Anmeldenummer: 10003855.3
(22) Anmeldetag: 12.04.2010
(51) Int. Cl.: A47C 4/04, F16C 11/04, E05D 1/04

(54) **Klappbares Möbelstück mit gelenkig miteinader verbundenen Tragelementen und hierfür geeignetes Gelenk**
Foldable furniture item with articulated connected carrying elements and joint suited for same
Pièce de mobilier pliante dotée d'éléments porteurs reliés ensemble de manière articulée et articulation appropriée

(43) Veröffentlichungstag der Anmeldung: 12.10.2011
(73) Patentinhaber: Sieger GmbH, 77839 Lichtenau (DE)
(72) Erfinder: Burkard, Klaus, 77839 Lichtenau (DE)
(74) Vertreter: Lenz, Steffen

(56) Entgegenhaltungen:
- EP-A1- 0 029 763
- EP-A1- 0 247 756
- EP-A1- 1 857 623
- CH-A- 200 607
- DE-A1-102005 024 427
- US-A- 3 936 907

## Beschreibung

Die Erfindung betrifft ein klappbares Möbelstück mit wenigstens zwei mittels eines Gelenks schwenkbar miteinander verbundenen Tragelementen.

Möbelstücke mit klappbar aneinander angelenkten Tragelementen, wie Füßen, Arm- oder Rückenlehnen etc., sind in vielfältiger Ausgestaltung bekannt, wobei sie insbesondere in Form von Gartenmöbeln, wie Stühlen, Liegen und Tischen, verbreitet Verwendung finden, um sie während jahreszeitlich oder wetterbedingten Zeiträumen der Nichtbenutzung möglichst kompakt lagern zu können. Um die Klappfunktion zu gewährleisten, sind üblicherweise zumindest einige Tragelemente solcher Möbelstücke, wie deren Füße, Sitzflächen, Rücken- und Armlehnen oder Platten, mittels Gelenken schwenkbar miteinander verbunden. Dies geschieht in der Regel unter Verwendung von separaten Scharnieren, wie insbesondere in Form von Beschlägen, mit einer Schwenkachse und hieran befestigten, um die Schwenkachse schwenkbaren Befestigungsteilen, an welchen die relativ zueinander schwenkbaren Tragelemente der Möbelstücke befestigt sind. Nachteilig ist einerseits der relativ hohe konstruktive Aufwand bei der Montage solcher Möbelstücke, der eine Vielzahl an Einzelteilen erfordert, um allein für die schwenkbare Verbindung der jeweils relativ zueinander verschwenkbaren Tragelemente zu sorgen. Andererseits sind solche Scharniere häufig wenig ästhetisch und beinträchtigen den optischen Gesamteindruck des gesamten Möbelstückes.

Aus EP 0 029 763 A1 ist ein Fahrzeugsitz bekannt, wobei das Sitzteil und das Lehnenteil komplementäre Gleitelemente aufweisen, wobei das Lehnenteil um eine horizontale Querachse schwenkbar am Sitzteil befestigt ist.

Der Erfindung liegt daher die Aufgabe zugrunde, ein klappbares Möbelstück der eingangs genannten Art sowie ein hierfür geeignetes Gelenk auf einfache und kostengünstige Weise dahingehend weiterzubilden, daß den vorgenannten Nachteilen in wirksamer Weise begegnet werden kann.

Erfindungsgemäß wird diese Aufgabe bei einem Möbelstück sowie bei einem hierfür geeigneten Gelenk der eingangs genannten Art dadurch gelöst, daß das Gelenk ein erstes Gelenkteil mit wenigstens einem Gleitzapfen umfaßt, welcher einen Außenquerschnitt in Form eines Kreisringausschnittes aufweist, und daß das Gelenk ein zweites Gelenkteil mit wenigstens einer Aufnahme umfaßt, welche einen zu dem Gleitzapfen des ersten Gelenkteils im wesentlichen komplementären Innenquerschnitt aufweist, wobei der Gleitzapfen des ersten Gelenkteils unter Reibkontakt mit der Aufnahme des zweiten Gelenkteils gleitend in der Aufnahme verlagerbar ist.

Die erfindungsgemäße Ausgestaltung ermöglicht zunächst eine sehr einfache Montage des Möbelstückes, indem der Gleitzapfen des erste Gelenkteils lediglich in die hierzu komplementäre Aufnahme des zweiten Gelenkteils eingesteckt werden muß, wobei der Winkel zwischen den schwenkbar aneinander angelenkten Tragelementen mit zunehmender Einstecktiefe der Gelenkteile ineinander zunimmt. Darüber hinaus kann das Gelenk mangels Vorhandensein einer körperlichen Schwenkachse zumindest im aufgeklappten Zustand des Möbelstückes als solches nicht als Gelenk erkennbar sein, so daß das Möbelstück den optischen Eindruck eines massiven, nicht klappbaren Möbelstückes zu vermitteln vermag. Der Widerstand des Gleitzapfens des ersten Gelenkteils gegen das Hin- und Herbewegen in der Aufnahme des zweiten Gelenkteils anläßlich eines Verschwenkens der hiermit verbundenen Tragelemente kann dabei durch entsprechende Auswahl der Paßtoleranzen und/oder durch entsprechende Rauhigkeit des Gleitzapfens bzw. der Aufnahme in praktisch beliebigen Grenzen variiert werden. Mit "Außenquerschnitt in Form eines Kreisringausschnittes" im Zusammenhang mit dem Gleitzapfen des ersten Gelenkteils ist im übrigen gemeint, daß der Außenquerschnitt des Gleitzapfens in der Ebene senkrecht zu der - wie gesagt, nicht körperlich vorhandenen - Schwenkachse des Gelenks die Form des Ausschnittes oder Sektors eines Kreisrings besitzt, dessen Mittelpunkt mit der "virtuellen Schwenkachse des Gelenks zusammenfällt.

Während das erste Gelenkteil bzw. das zweite Gelenkteil grundsätzlich auch einstückig mit dem jeweils verschwenkbar zu lagernden Tragelement des Möbelstückes ausgestaltet sein kann, kann gemäß einer bevorzugten Ausführungsform vorgesehen sein, daß das erste Gelenkteil bzw. das zweite Gelenkteil an seinem dem Gleitzapfen bzw. der Aufnahme entgegengesetzten Ende eine Befestigungseinrichtung aufweist, welche zum Befestigen jeweils eines der beiden schwenkbar miteinander verbundenen Tragelemente ausgebildet ist.

Um in letzterem Fall wiederum für eine sehr einfache und schnelle Montage des Möbelstückes zu sorgen, kann es von Vorteil sein, wenn die Befestigungseinrichtung entweder einen in ein Hohlprofil des jeweiligen Tragelementes einführbaren Befestigungszapfen aufweist, welcher insbesondere mit einer reibungserhöhenden Oberfläche und/oder mit einer mit dem Tragelement zusammenwirkenden Rast- oder Klemmeinrichtung versehen ist; oder wenn die Befestigungseinrichtung eine in ein im wesentlichen stabförmiges Ende des jeweiligen Tragelementes aufsteckbare Befestigungshülse aufweist, welche insbesondere mit einer reibungserhöhenden Innenfläche und/oder mit einer mit dem Tragelement zusammenwirkenden Rast- oder Klemmeinrichtung versehen ist. Bei beiden genannten Alternativen stellt die Verbindung zwischen der Befestigungseinrichtung des Gelenkteils und dem hieran jeweils zu befestigenden Tragelement des Möbelstückes eine starre Steckverbindung dar, welche zweckmäßigerweise durch die reibungserhöhende (z.B. mit Flächenstrukturen, wie Rippen oder dergleichen versehene) Außen- bzw. Innenfläche oder die durch die Rast- oder Klemmeinrichtung gesichert ist. Als Rast- oder Klemmeinrichtung kommen beliebige bekannte Einrichtungen solcher Art in Betracht, wie beispielsweise solche Rasteinrichtungen, bei welchen ein sich etwa senkrecht zur Längsachse der Befestigungseinrichtung erstreckender und gegebenenfalls in Raststellung elastisch vorbelasteter Stift fluchtende Bohrungen der Befestigungseinrichtung des Gelenkteils sowie des Tragelementes des Möbelstückes durchsetzt. Als mögliche Klemmeinrichtungen seien exemplarisch Blind- oder Spreiznieten aus Kunststoff oder Metall erwähnt, welche als separates Einführteil für einen klemmenden Halt des Tragelementes an der Befestigungseinrichtung des jeweiligen Gelenkteils sorgen. Gleichfalls ist selbstverständlich möglich, das Tragelement mittels Schrauben oder Tackern an der Befestigungseinrichtung des jeweiligen Gelenkteils zu sichern.

Um für eine hohe Stabilität der Gelenkverbindung und/oder für einen geeigneten Reibungswiderstand gegen ein Ausziehen/Einschieben der beiden Gelenkteile aus- bzw. ineinander zu sorgen, kann ferner vorgesehen sein, daß das erste Gelenkteil eine Mehrzahl an nebeneinander angeordneten, separaten oder über Querstege miteinander verbundenen Gleitzapfen umfaßt, welche unter Reibkontakt in einer Mehrzahl an Aufnahmen des zweiten Gelenkteils oder in einer oder mehreren, sämtlichen oder mehreren Gleitzapfen gemeinsamen Aufnahme(n) des zweiten Gelenkteils verlagerbar sind. Mit anderen Worten kann folglich der Querschnitt des/der Gleitzapfen(s) und/oder der Querschnitt der hierzu komplementären Aufnahme in einer Ebene, welche die "virtuelle" Schwenkachse beinhaltet und senkrecht zu dessen Kreisringebene angeordnet ist, nach Art eines Profils mit praktisch beliebigen Rippen und/oder Stegen ausgestaltet sein.

Um eine besonders einfache und kostengünstige Massenfertigung des Gelenks zu gewährleisten, kann es darüber hinaus günstig sein, wenn das erste Gelenkteil und das zweite Gelenkteil jeweils einstückig, insbesondere in Form jeweils eines Spritzguß- oder Metallgußteils, ausgebildet sind. Das Gelenk umfaßt folglich - abgesehen von gegebenenfalls vorgesehenen Klemm- oder Rasteinrichtungen zur Sicherung des Tragteils an der Befestigungseinrichtung des jeweiligen Gelenkteils - lediglich zwei Teile, welche vorzugsweise mit den zueinander verschwenkbaren Tragteilen des Möbelstückes eine einfache Steckverbindung eingehen. Aus Kostengründen können die beiden Gelenkteile vorzugsweise in Form von Kunststoff-Spritzgußteilen ausgebildet sein.

In weiterhin bevorzugter Ausgestaltung kann vorgesehen sein, daß - je nach gewünschtem Schwenkwinkel der relativ zueinander verschwenk- bzw. klappbaren Tragelemente, sich der Gleitzapfen des ersten Gelenkteils bzw. die Aufnahme des zweiten Gelenkteils um einen Kreisringausschnitt zwischen 20° und 135°, insbesondere zwischen 35° und 135°, vorzugsweise zwischen 50° und 135°, wie z.B. zwischen etwa 70° und 135° erstreckt. Der Winkel bzw. die Umfangslänge des Kreisringausschnitt oder -sektors legt folglich die maximale Schwenkbarkeit der beiden Gelenkteile relativ zueinander fest, wobei letztere selbstverständlich vor einem gänzlichen Ausziehen auseinander bewahrt werden sollten.

Vorzugsweise kann/können das dem freien Ende des Gleitzapfens des ersten Gelenkteils entgegengesetzte Ende des Gleitzapfens und/oder das freie Ende der Aufnahme des zweiten Gelenkteils an einer senkrecht zur Schwenkachse des Gelenks angeordneten Anschlagfläche angeordnet sein, welche als Anschlag des ersten Gelenkteils an dem zweiten Gelenkteil in deren gänzlich ineinander eingeschobenen Stellung dient. Folglich liegen z.B. die - vorzugsweise etwa deckungsgleichen - Anschläge beider Gelenkteile im aufgeklappten Zustand des Möbelstückes aneinander an und vermitteln den Eindruck einer durchgängigen, massiven Verbindung der hiermit angelenkten Tragelemente des Möbelstückes.

In diesem Zusammenhang hat es sich als zweckmäßig erwiesen, wenn der kreisringausschnittsförmige Gleitzapfen des ersten Gelenkteils an dem seinem freien Ende abgewandten Ende senkrecht von der Anschlagfläche des ersten Gelenkteils vorsteht und/oder sich das freie Ende der Aufnahme des zweiten Gelenkteils senkrecht in die Anschlagfläche des zweiten Gelenkteils hinein erstreckt, d.h. die kreisförmige Krümmung des Gleitzapfens bzw. der Aufnahme mündet etwa senkrecht in die jeweilige Anschlagfläche.

Gemäß einer Weiterbildung kann vorgesehen sein, daß das erste Gelenkteil und/oder das zweite Gelenkteil zwischen seiner Befestigungseinrichtung und seinem Gleitzapfen bzw. zwischen seiner Befestigungseinrichtung und seiner Aufnahme einen Krümmungs- oder Knick abschnitt aufweist, welcher insbesondere eine Krümmung oder einen Knick ebenfalls um die "virtuelle" Schwenkachse des Gelenks aufweist und den Krümmungswinkel des Kreisringausschnittes des Gleitzapfens bzw. der Aufnahme folglich fortsetzt, d.h. der Krümmungs-oder Knickabschnitt erstreckt sich vorzugsweise in einer Ebene senkrecht zur "virtuellen" Schwenkachse des Gelenks und vergrößert vorzugsweise den durch das Gelenk vorgegebenen Krümmungswinkel, indem die Längsachse der Befestigungseinrichtung des jeweiligen Gelenkteils bzw. des hieran festgelegten Tragteils des Möbelstückes unter einem Winkel in Bezug auf die Anschlagflächen der beiden Scharnierteile aneinander im aufgeklappten Zustand des Möbelstückes angeordnet ist. Auf diese Weise kann der durch den Winkel (oder genauer: der Umfangslänge des Kreisringausschnittes), über welchen sich der Kreisringausschnitt des Gleitzapfens bzw. der Aufnahme erstreckt, festgelegte maximale Schwenkwinkel des Gelenks auf das notwendige Maß reduziert und insbesondere an den gewünschten maximalen Schwenkwinkel der hieran befestigten, klappbaren Tragelemente des Möbelstückes in dessen aufgeklappten Zustand angepaßt werden, in welchem insbesondere die beiden Anschlagflächen miteinander in Kontakt treten.

Gemäß einer weiteren Weiterbildung kann vorgesehen sein, daß wenigstens eines der beiden Gelenkteile eine zweite Befestigungseinrichtung aufweist, welche zum, insbesondere verstellbaren, Befestigen eines weiteren Tragelementes des Möbelstückes ausgebildet ist. Die zweite Befestigungseinrichtung kann sich dabei insbesondere in eine zu der (ersten) Befestigungseinrichtung, an welchem eines der relativ zueinander verschwenkbaren Tragelemente befestigt ist, verschiedene Richtung erstrecken, um hieran ein weiteres Tragelement ebenfalls klappbar, verschiebbar oder auch starr festlegen zu können.

Hinsichtlich einer einfachen und schnellen Montage kann das erste Gelenkteil gänzlich aus dem zweiten Gelenkteil des Gelenks ausgezogen werden, d.h. es muß keine zusätzliche Sicherung vorgesehen sein, um die beiden Gelenkteile unverlierbar aneinander zu halten.

Das erste Gelenkteil ist dadurch vor einem gänzlichen Ausziehen aus dem zweiten Gelenkteil bewahrt, daß die hieran festgelegten Tragelemente des Möbelstückes aneinander anstoßen, bevor das erste Gelenkteil gänzlich aus dem zweiten Gelenkteil ausgezogen worden ist. In konstruktiver Hinsicht kann dies beispielsweise durch eine entsprechende Krümmung der beiden relativ zueinander schwenkbaren Tragelemente zumindest geringfügig konvex nach außen sichergestellt sein, so daß die dem Gelenk abgewandten Enden dieser Tragteile aneinander anstoßen, bevor die jeweiligen Gelenkteile gänzlich auseinander ausgezogen worden sind. Alternativ oder zusätzlich kann dies insbesondere auch dadurch sichergestellt sein, daß die Längsachsen der Befestigungseinrichtungen der beiden Gelenkteile in der gänzlich auseinander ausgezogenen Stellung der Gelenkteile unter einem Winkel von wenigstens 180°, insbesondere unter einem Winkel zwischen etwa 180° und etwa 225°, zueinander angeordnet sind, so daß auch im Falle sich etwa linear ersteckender oder gar leicht konkav nach innen gekrümmter Tragteile diese im Bereich ihrer dem Gelenk abgewandten Enden aneinander anstoßen, bevor die Gelenkteile vollständig auseinander ausgezogen werden können. Folglich kann der Winkel bzw. die Umfangslänge des Kreisringausschnittes oder -sektors des Gleitzapfens bzw. der Aufnahme in diesem Fall wenigstens 90°, insbesondere zwischen etwa 90° und etwa 135°, betragen, oder auch weniger, sofern zumindest eines der Gelenkteile mit einem Krümmungs- oder Knickabschnitt der weiter oben beschriebenen Art versehen ist.

Wie eingangs erwähnt, kann das erfindungsgemäße Möbelstück grundsätzlich ein beliebiges klappbares Möbelstück sein, wobei es insbesondere von einem klappbaren Stuhl, einer klappbaren Liege oder einem klappbaren Tisch gebildet sein kann, welche beispielsweise für den Einsatz im Außenbereich geeignet sind. Das erfindungsgemäße Gelenk kann hierbei grundsätzlich beliebige schwenkbar miteinander zu verbindende Tragelemente des Möbelstückes klappbar miteinander verbinden, wobei es insbesondere zwei benachbarte, z.B. in Form von Füßen ausgebildete, Tragelemente des Möbelstückes schwenkbar miteinander zu verbinden vermag.

Weitere Merkmale und Vorteile der Erfindung ergeben sich aus der nachfolgenden Beschreibung eines Ausführungsbeispiels unter Bezugnahme auf die Zeichnungen. Dabei zeigen:
- Fig. 1: eine schematische Seitenansicht einer Ausführungsform eines erfindungsgemäßen Möbelstückes in Form eines Stuhls mit schwenkbar aneinander befestigten Füßen;
- Fig. 2: eine Detailansicht des Ausschnittes II der Fig. 1;
- Fig. 3: eine schematische Querschnittsansicht des Gelenks des Möbelstückes gemäß Fig. 1 und 2 mit gänzlich ineinander eingeschobenen Gekenkteilen;
- Fig. 4: eine der Fig. 3 entsprechende schematische Querschnittsansicht des Gelenks mit auseinander ausgezogenen Gelenkteilen;
- Fig. 5: eine schematische perspektivische Ansicht der beiden Gelenkteile des Gelenks gemäß Fig. 3 und 4; und
- Fig. 6 bis 8: jeweils eine Seitenansicht des Gelenks mit den hieran zu befestigenden Stuhlfüßen in verschiedenen Montagesituationen.

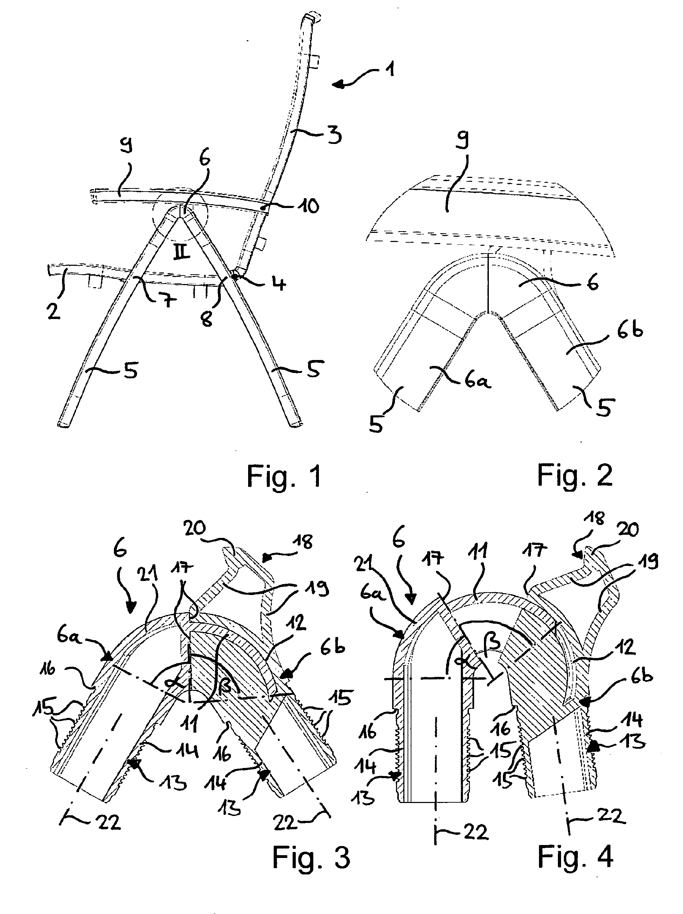

In Fig. 1 ist ein Ausführungsbeispiel eines erfindungsgemäßen klappbaren Möbelstückes 1 wiedergegeben, welches im vorliegenden Fall in Form eines z.B. für den Gartenbereich vorgesehenen Stuhls ausgebildet ist und sich in dem in Fig. 1 dargestellten Zustand in seinem aufgeklappten, zur Benutzung vorgesehenen Zustand befindet. Der Stuhl weist hierbei mehrere Tragelemente, z.B. eine Sitzfläche 2 und eine Rückenlehne 3 auf, welche um eine Schwenkachse 4 verschwenkbar miteinander verbunden sind. Darüber hinaus weist der Stuhl vier Tragelemente in Form von Füßen 5 auf, wobei die jeweils vorderen und hinteren Füße 5 beim vorliegenden Ausführungsbeispiel etwa in Form eines auf dem Kopf stehenden "V" angeordnet und im Bereich ihrer oberen Enden mittels eines weiter unten im einzelnen erläuterten Gelenks 6 (vgl. insbesondere Fig. 3 bis 5) schwenkbar miteinander verbunden sind. An einem jeweils mit Abstand von dem Gelenk 6 angeordneten Punkt 7, 8 sind die Füße 5 ferner schwenkbar und/oder verschiebbar mit der Sitzfläche 2 verbunden. Darüber hinaus kann der Stuhl mit einem weiteren Tragelement in Form einer Armlehne 9 ausgestattet sein, welche beispielsweise einerseits um eine Achse 10 schwenkbar an der Rückenlehne 3, andererseits beispielsweise verschiebbar an dem Gelenk 6 (siehe hierzu ebenfalls weiter unten in bezug auf Fig. 3 bis 5) festgelegt ist. Dem Fachmann ist offensichtlich, daß der Stuhl derart zusammengeklappt werden kann, daß die beiden Füße 5 in eine etwa parallele Stellung gebracht werden, in welcher sich sowohl die Sitzfläche 2 als auch die Rückenlehne 3 sowie die Armlehne 9 in einer ebenfalls etwa parallelen Ausrichtung hierzu befinden.

Wie aus der Detailansicht gemäß Fig. 2 ersichtlich, ist das Gelenk 6 im aufgeklappten Zustand des Stuhls praktisch nicht als solches erkennbar und vermittelt den ästhetisch wünschenswerten Eindruck eines massiven Stuhles mit fest miteinander verbundenen Füßen 5.

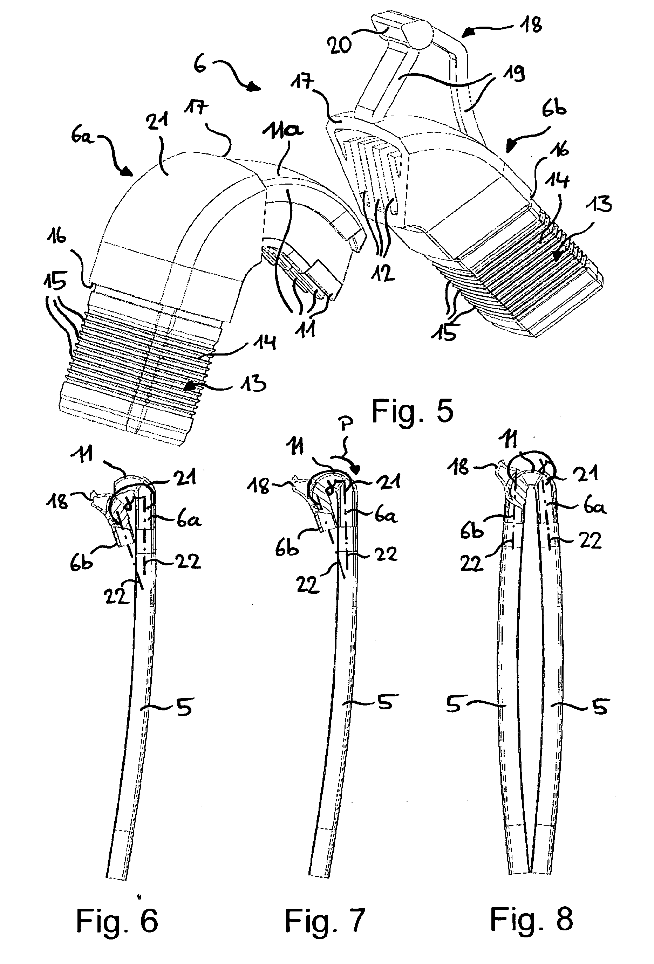

In den Fig. 3 bis 5 sind verschiedene Ansichten einer der bei dem Stuhl gemäß Fig. 1 und 2 eingesetzten Ausführungsform des erfindungsgemäßen Gelenks 6 wiedergegeben. Wie hierin erkennbar, umfaßt das Gelenk 6 ein erstes Gelenkteil 6a und ein zweites Gelenkteil 6b, welche gleitend ineinander einschiebbar und auseinander ausziehbar sind, ohne daß eine körperliche Schwenkachse vorhanden ist. Das erste Gelenkteil 6a umfaßt einen Gleitzapfen 11, welcher einen Außenquerschnitt in Form eines Kreisringausschnittes oder -sektors aufweist, welcher sich bei dem gezeigten Ausführungsbeispiel um einen Winkel β von etwa 80° erstreckt. Letzteres gilt gleichfalls für eine hierzu etwa komplementäre Aufnahme 12 des zweiten Gelenkteils, in welcher der Gleitzapfen 11 des erstens Gelenkteils 6a unter Reibkontakt hin- und her zu gleiten vermag. Wie insbesondere der Fig. 5 zu entnehmen ist, kann der Gleitzapfen 11 aus Gründen einer erhöhten Stabilität insbesondere in eine Mehrzahl an nebeneinander angeordnete Gleitzapfen 11 unterteilt sein, welche gegebenenfalls über einen Quersteg 11a versteifend miteinander verbunden sind. Die Aufnahme 12 umfaßt hier ihrerseits eine Mehrzahl an nebeneinander angeordneten Aufnahmen 12, welche wiederum im wesentlichen komplementär zu der Geometrie des bzw. der Gleitzapfen(s) 11 ausgebildet sind.

Jedes Gelenkteil 6a, 6b weist an seiner dem Gleitzapfen 11 bzw. der Aufnahme 12 entgegengesetzten Ende je eine Befestigungseinrichtung 13 auf, welche zum Befestigen jeweils eines der beiden relativ zueinander schwenkbaren Fuße 5 des Stuhls dienen (vgl. auch Fig. 1). Die Befestigungseinrichtungen 13 können vorzugsweise im wesentlichen identisch ausgestaltet sein und weisen bei dem dargestellten Ausführungsbeispiel je einen Befestigungszapfen 14 auf, welcher mit einer reibungserhöhenden Oberfläche, wie in Form einer Mehrzahl an sich um dessen Umfang herum erstreckender Rippen 15, versehen ist. An dem seinem freien Ende abgewandten Ende des jeweiligen Befestigungszapfens 14 befindet sich ein z.B. etwa stufenförmiger Anschlag 16. Wie weiter unten unter Bezugnahme auf die Fig. 6 bis 8 noch näher erläutert, lassen sich die Befestigungszapfen 14 folglich in jeweils einen im vorliegenden Fall als Hohlprofil ausgebildeten Fuß 5 einstecken, dessen Ende mit dem Anschlag 16 in Kontakt tritt und dessen Dicke seines Hohlprofils vorzugsweise etwa der Stufenhöhe des Anschlags 16 entspricht, so daß ein etwa ebener Übergang zwischen dem jeweiligen Gelenkteil 6a, 6b und dem jeweiligen Fuß 5 gebildet ist. Um für eine feste Verbindung der genannten Komponenten zu sorgen, können selbstverständlich auch die Füße 5 - alternativ oder zusätzlich zu den reibungserhöhenden Strukturen 15 der Befestigungseinrichtungen 13 - endseitig mit einer entsprechenden Außenstruktur (nicht gezeigt) ausgestattet sein.

Wie ebenfalls insbesondere aus den Fig. 3 bis 5 erkennbar, ist das dem freien Ende des Gleitzapfens 11 entgegengesetzte Ende sowie das freie Ende der Aufnahme 12 der jeweiligen Gelenkteile 6a, 6b jeweils an einer senkrecht zu der - wie oben erwähnt, körperlich nicht vorhandenen - Schwenkachse des Gelenks 6 angeordneten Anschlagfläche 17 angeordnet, welche als Anschlag der beiden Gelenkteile 6a, 6b aneinander in deren gänzlich ineinander eingeschobenen Stellung (Fig. 3), also im aufgeklappten Zustand des Möbelstückes 1 (Fig. 1 und 2) dienen und welche vorzugsweise etwa deckungsgleich sind. Sowohl der kreisringausschnittsförmige Gleitzapfen 11 des ersten Gelenkteils 6a als auch die Aufnahme 12 des zweiten Gelenkteils 6b münden hierbei etwa senkrecht in die jeweilige Anschlagfläche 17 hinein.

Darüber hinaus weist beim vorliegenden Ausführungsbeispiel eines der Gelenkteile 6a, 6b - hier das zweite Gelenkteil 6b - eine zweite Befestigungseinrichtung 18 auf, welche zum Befestigen eines weiteren Tragelementes des Möbelstückes 1 - hier der Armlehne 9 (Fig. 1) - dient. Die zweite Befestigungseinrichtung 18 kann grundsätzlich von beliebiger bekannter Art sein und umfaßt im vorliegenden Fall beispielsweise ein mittels Stegen 19 an der Außenfläche des zweiten Gelenkteils 6b gehaltenes Gleitstück 20 auf, welches in eine z.B. nach unten offene U-Führung an der Unterseite der Armlehne 9 (nicht gezeigt) eingreift und entlang dieser hin- und her verschiebbar ist, so daß die Armlehne 9 verstellbar an der zweiten Befestigungseinrichtung 18 festgelegt ist, um das Zusammenklappen der hieran angelenkten Rückenlehne 3 gemeinsam mit der Armlehne 9 sowie gegebenenfalls ein Verstellen der Rückenlehne 3 in verschiedene Neigungspositionen zu ermöglichen, wenn die hieran angelenkte Armlehne 9 in verschiedenen Längspositionen entlang Ihrer Führung an dem Gleitstück 20 der zweiten Befestigungseinrichtung 18 arretiert wird.

Bei dem gezeigten Ausführungsbeispiel weist eines der Gelenkteile 6a, 6b des Gelenks 6 - hier das erste Gelenkteil 6a- darüber hinaus einen zwischen seiner Befestigungseinrichtung 13 und seinem Gleitzapfen 11 angeordneten Krümmungs- 21 oder Knickabschnitt auf, welcher im vorliegenden Fall in Form eines Krümmungsabschnittes 21 ausgebildet ist und beispielsweise einen dem Krümmungswinkel des Kreisringausschnittes des Gleitzapfens etwa entsprechenden Krümmungsradius aufweist und dessen Verlauf folglich stetig fortsetzt.

Der Gleitzapfen 11 des ersten Gelenkteils 6a sowie die Aufnahme 12 des zweiten Gelenkteils 6b sind beim vorliegenden Ausführungsbeispiel derart ausgebildet, daß das erste Gelenkteil 6a gänzlich aus dem zweiten Gelenkteil 6b ausziehbar ist, wie es beispielsweise in der Fig. 3 dargestellt ist. Um das erste Gelenkteil 6a anläßlich des Zusammenkappens des Möbelstückes 1 gleichwohl vor einem gänzlichen Ausziehen aus dem zweiten Gelenkteil 6b zu bewahren, stoßen die hieran jeweils festgelegten Tragelemente -hier die Füße 5 - jedoch im montierten Zustand des Möbelstückes 1 im Bereich ihrer dem Gelenk 6 abgewandten (unteren) freien Enden aneinander an, bevor das erste Gelenkteil 6a vollständig aus dem zweiten Gelenkteil ausgezogen worden ist (vgl. auch Fig. 8). Dies kann einerseits dadurch gewährleistet sein, daß die Füße 5 eine zumindest geringfügig konvex nach außen gekrümmte Erstreckung aufweisen (vgl. hierzu insbesondere Fig. 1 und 8). Alternativ oder zusätzlich hierzu kann zu diesem Zweck insbesondere - auch ohne daß hierzu eine gekrümmte Erstreckung der Füße 5 notwendig wäre - vorgesehen sein, daß die Längsachsen 22 der Befestigungseinrichtungen 13 der beiden Gelenkteile 6a, 6b in ihrer gänzlich auseinander ausgezogenen Stellung der Gelenkteile 6a, 6b unter einem zumindest geringfügig größeren Winkel als 180°, wie unter einem Winkel zwischen etwa 180° und etwa 225° oder insbesondere einem Winkel zwischen etwa 180° und etwa 210°, zueinander angeordnet sind (vgl. hierzu insbesondere Fig. 6 und 7). In konstruktiver Hinsicht kann dies beispielsweise dadurch sichergestellt sein, daß sich der Gleitzapfen 11 des ersten Gelenkteils 6a bzw. die hierzu komplementäre Aufnahme 12 des zweiten Gelenkteils 6b um einen Kreisringausschnitt erstrecken, welcher zumindest geringfügig größer ist als 90°, z.B. zwischen etwa 90° und 135° (nicht dargestellt). Wenn hingegen - wie im vorliegenden Ausführungsbeispiel der Fall - zumindest eines der Gelenkteile 6a, 6b mit einem die Krümmung des Gleitzapfens 11 bzw. der Aufnahme 12 verlängernden Krümmungsabschnitt 21 ausgebildet ist, so kann eine solche Sicherung gegen Vereinzelung der beiden Gelenkteile 6a, 6b im montierten Zustand des Möbelstückes dadurch sichergestellt sein, daß die Summe aus einerseits der Hälfte des Krümmungswinkels α des Krümmungsabschnittes 21 und andererseits des Winkels β des Kreisringausschnittes des Gleitzapfens 11 bzw. der Aufnahme 12 zumindest geringfügig größer ist als 90° ist und z.B. zwischen etwa 90° und 135° beträgt (vgl. Fig. 3 und 4). In jedem Fall sorgt eine solche Ausgestaltung für einen Anschlag der an den Befestigungseinrichtungen 13 der jeweiligen Gelenkteilen 6a, 6b festgelegten Tragelemente 5 aneinander oder auch an einem separaten konstruktiven Element des Möbelstückes 1 (nicht gezeigt), bevor die Gelenkteile 6a, 6b gänzlich auseinander ausgezogen werden können, so daß das Gelenk 6 hierdurch vor einer Vereinzelung der Gelenkteile 6a, 6b im montierten Zustand des Möbelstückes 1 stets sicher und zuverlässig bewahrt ist.

Sowohl das erste Gelenkteil 6a als auch das zweite Gelenkteil 6b des Gelenks 6 können im übrigen jeweils einstückig gefertigt und beispielsweise in Form je eines Kunststoff-Spritzgußteils ausgebildet sein.

Nachstehend ist die sehr einfache, schnelle und bequeme Montage der beiden Tragelemente bzw. Füße 5 an das erfindungsgemäße Gelenk 6 unter Bezugnahme auf die Fig. 6 bis 8 kurz erläutert:

In der in Fig. 6 gezeigten Situation ist zunächst ein Fuß 5 des Möbelstückes an der Befestigungseinrichtung des ersten Gelenkteils 6a festgelegt und das zweite Gelenkteil 6b in Bezug auf das erste Gelenkteil 6a in eine solche Position verbracht worden, daß der Gleitzapfen 11 gerade in die Aufnahme eingeführt werden kann. Wie aus Fig. 6 ersichtlich, befinden sich die Längsachsen 22 der Befestigungseinrichtungen der beiden Gelenkteile in dieser Situation unter einem Winkel γ von größer 180°, wie beispielsweise von etwa 200°. Nachdem das zweite Gelenkteil 6b in Richtung des Pfeils P der Fig. 7 in das erste Gelenkteil 6a eingeschoben worden ist, wird an dessen Befestigungseinrichtung sodann der andere (in Fig. 8 linke) Fuß 5 des Möbelstückes angebracht. Sobald dies geschehen ist, stoßen die in Fig. 8 unteren Enden der Füße 5 aneinander an, bevor die Gelenkteile 6a, 6b gänzlich auseinander ausgezogen werden können, so daß der in diesem Montagezustand maximal mögliche Winkel γ zwischen den Längsachsen 22 der Befestigungseinrichtungen der beiden Gelenkteile 6a, 6b nun stets auf einen Wert begrenzt ist, um eine Vereinzelung der beiden Gelenkteile 6a, 6b zu verhindern.

## Patentansprüche

1. Klappbares Möbelstück (1) mit wenigstens zwei mittels eines Gelenks (6) schwenkbar miteinander verbundenen Tragelementen (5), wobei das Gelenk (6) ein erstes Gelenkteil (6a) mit wenigstens einem Gleitzapfen (11) umfaßt, welcher einen Außenquerschnitt in Form eines Kreisringausschnittes aufweist, und wobei das Gelenk (6) ein zweites Gelenkteil (6b) mit wenigstens einer Aufnahme (12) umfaßt, welche einen zu dem Gleitzapfen (11) des ersten Gelenkteils (6a) im wesentlichen komplementären Innenquerschnitt aufweist, wobei der Gleitzapfen (11) des ersten Gelenkteils (6a) unter Reibkontakt mit der Aufnahme (12) des zweiten Gelenkteils (6b) gleitend in der Aufnahme (12) verlagerbar ist, wobei das erste Gelenkteil (6a) gänzlich aus dem zweiten Gelenkteil (6b) des Gelenks (6) ausziehbar ist, **dadurch gekennzeichnet, daß** das erste Gelenkteil (6a) dadurch vor einem gänzlichen Ausziehen aus dem zweiten Gelenkteil (6b) bewahrt ist, daß die hieran festgelegten Tragelemente (5) des Möbelstückes (1) aneinander anstoßen, bevor das erste Gelenkteil (6a) gänzlich aus dem zweiten Gelenkteil (6b) ausgezogen worden ist.

2. Möbelstück nach Anspruch 1, **dadurch gekennzeichnet, daß** das erste Gelenkteil (6a) bzw. das zweite Gelenkteil (6b) an seinem dem Gleitzapfen (11) bzw. der Aufnahme (12) entgegengesetzten Ende eine Befestigungseinrichtung (13) aufweist, welche zum Befestigen jeweils eines der beiden schwenkbar miteinander verbundenen Tragelemente (5) ausgebildet ist.

3. Möbelstück nach Anspruch 2, **dadurch gekennzeichnet, daß** die Befestigungseinrichtung (13) entweder
- einen in ein Hohlprofil des jeweiligen Tragelementes (5) einführbaren Befestigungszapfen (14) aufweist, welcher insbesondere mit einer reibungserhöhenden Oberfläche (15) und/oder mit einer mit dem Tragelement (5) zusammenwirkenden Rast- oder Klemmeinrichtung versehen ist;
oder
- eine in ein im wesentlichen stabförmiges Ende des jeweiligen Tragelementes aufsteckbare Befestigungshülse aufweist, welche insbesondere mit einer reibungserhöhenden Innenfläche und/oder mit einer mit dem Tragelement zusammenwirkenden Rast- oder Klemmeinrichtung versehen ist.

4. Möbelstück nach einem der Ansprüche 1 bis 3, **dadurch gekennzeichnet, daß** das erste Gelenkteil (6a) eine Mehrzahl an nebeneinander angeordneten, separaten oder über Querstege (11a) miteinander verbundenen Gleitzapfen (11) umfaßt, welche unter Reibkontakt in einer Mehrzahl an Aufnahmen (12) des zweiten Gelenkteils (6b) oder in einer oder mehreren, sämtlichen oder mehreren Gleitzapfen (11) gemeinsamen Aufnahme(n) (12) des zweiten Gelenkteils (6b) verlagerbar sind.

5. Möbelstück nach einem der Ansprüche 1 bis 4, **dadurch gekennzeichnet, daß** das erste Gelenkteil (6a) und das zweite Gelenkteil (6b) jeweils einstückig, insbesondere in Form jeweils eines Spritzguß- oder Metallgußteils, ausgebildet sind.

6. Möbelstück nach einem der Ansprüche 1 bis 5, **dadurch gekennzeichnet, daß** sich der Gleitzapfen (11) des ersten Gelenkteils (6a) bzw. die Aufnahme (12) des zweiten Gelenkteils (6b) um einen Kreisringausschnitt mit einem Winkel (β) zwischen 20° und 135°, insbesondere zwischen 35° und 135°, vorzugsweise zwischen 50° und 135°, erstreckt.

7. Möbelstück nach einem der Ansprüche 1 bis 6, **dadurch gekennzeichnet, daß** das dem freien Ende des Gleitzapfens (11) des ersten Gelenkteils (6a) entgegengesetzte Ende des Gleitzapfens (11) und/oder das freie Ende der Aufnahme (12) des zweiten Gelenkteils (6b) an einer senkrecht zur Schwenkachse des Gelenks (6) angeordneten Anschlagfläche (17) angeordnet ist/sind, welche als Anschlag des ersten Gelenkteils (6a) an dem zweiten Gelenkteil (6b) in deren gänzlich ineinander eingeschobenen Stellung dient.

8. Möbelstück nach Anspruch 7, **dadurch gekennzeichnet, daß** der kreisringausschnittsförmige Gleitzapfen (11) des ersten Gelenkteils (6a) an dem seinem freien Ende abgewandten Ende senkrecht von der Anschlagfläche (17) des ersten Gelenkteils (6a) vorsteht und/oder sich das freie Ende der Aufnahme (12) des zweiten Gelenkteils (6b) senkrecht in die Anschlagfläche (17) des zweiten Gelenkteils (6b) hinein erstreckt.

9. Möbelstück nach einem der Ansprüche 2 bis 8, **dadurch gekennzeichnet, daß** das erste Gelenkteil (6a) und/oder das zweite Gelenkteil (6b) zwischen seiner Befestigungseinrichtung (13) und seinem Gleitzapfen (11) bzw. zwischen seiner Befestigungseinrichtung (13) und seiner Aufnahme (12) einen Krümmungs- oder Knickabschnitt (21) aufweist.

10. Möbelstück nach einem der Ansprüche 1 bis 9, **dadurch gekennzeichnet, daß** wenigstens eines der beiden Gelenkteile (6a, 6b) eine zweite Befestigungseinrichtung (18) aufweist, welche zum, insbesondere verstellbaren, Befestigen eines weiteren Tragelementes (9) des Möbelstückes (1) ausgebildet ist.

11. Möbelstück nach einem der Ansprüche 1 bis 10, **dadurch gekennzeichnet, daß** die Längsachsen (22) der Befestigungseinrichtungen (13) der beiden Gelenkteile (6a, 6b) in der gänzlich auseinander ausgezogenen Stellung der Gelenkteile (6a, 6b) unter einem Winkel (γ) von wenigstens 180°, insbesondere unter einem Winkel zwischen 180° und 225°, zueinander angeordnet sind.

12. Möbelstück nach einem der Ansprüche 1 bis 11, **dadurch gekennzeichnet, daß** es von einem klappbaren Stuhl, einer klappbaren Liege oder einem klappbaren Tisch gebildet ist, wobei das Gelenk (6) insbesondere zwei benachbarte, in Form von Füßen ausgebildete Tragelemente (5) des Möbelstückes (1) schwenkbar miteinander verbindet.

## Claims

1. An item of folding furniture (1) having at least two supporting elements (5) connected swivellably together by means of a joint (6), the joint (6) comprising a first joint part (6a) with at least one sliding peg (11), which has an external cross section in the form of a portion of a circular ring, and the joint (6) comprising a second joint part (6b) with at least one receptacle (12), which has an internal cross section substantially complementary to the sliding peg (11) of the first joint part (6a), the sliding peg (11) of the first joint part (6a) being displaceable slidingly in the receptacle (12) in frictional contact with the receptacle (12) of the second joint part (6b), the first joint part (6a) being capable of full withdrawal from the second joint part (6b) of the joint (6), **characterised in that** the first joint part (6a) is protected from being withdrawn fully from the second joint part (6b) **in that** the supporting elements (5) of the item of furniture (1) fixed thereto come into contact with one another before the first joint part (6a) has been fully withdrawn from the second joint part (6b).

2. An item of furniture according to claim 1, **characterised in that** the first joint part (6a) and the second joint part (6b) comprise fastening means (13) at their ends respectively opposite the sliding peg (11) or the receptacle (12), which fastening means are designed to fasten in each case one of the two supporting elements (5) connected swivellably together.

3. An item of furniture according to claim 2, **characterised in that** the fastening means (13) either
- comprises a fastening peg (14) which may be introduced into a hollow profile of the respective supporting element (5) and which is provided in particular with a friction-increasing surface (15) and/or with a snap-in or clip means interacting with the supporting element (5);
or
- comprises a fastening sleeve which may be placed into a substantially bar-type end of the respective supporting element, which fastening sleeve is provided in particular with a friction-increasing inner surface and/or with a snap-in or clip means interacting with the supporting element.

4. An item of furniture according to any one of claims 1 to 3, **characterised in that** the first joint part (6a) comprises a plurality of sliding pegs (11) arranged next to one another and which are separate or connected together by transverse webs (11a), which sliding pegs are displaceable with frictional contact in a plurality of receptacles (12) of the second joint part (6b) or in one or more receptacle(s) (12) of the second joint part (6b) common to all or a plurality of the sliding pegs (11).

5. An item of furniture according to any one of claims 1 to 4, **characterised in that** the first joint part (6a) and the second joint part (6b) are in each case of one-piece construction, in particular in the form in each case of an injection-moulded or cast metal part.

6. An item of furniture according to any one of claims 1 to 5, **characterised in that** the sliding peg (11) of the first joint part (6a) or the receptacle (12) of the second joint part (6b) extends about a portion of a circular ring covering an angle (β) of between 20° and 135°, in particular between 35° and 135°, preferably between 50° and 135°.

7. An item of furniture according to any one of claims 1 to 6, **characterised in that** the opposite end of the sliding peg (11) from the free end of the sliding peg (11) of the first joint part (6a) and or the free end of the receptacle (12) of the second joint part (6b) is/are arranged at a stop face (17) arranged perpendicular to the swivel axis of the joint (6), which face acts as a limit stop for the first joint part (6a) against the second joint part (6b) when the two are fully inserted one in the other.

8. An item of furniture according to claim 7, **characterised in that** the sliding peg (11), in the shape of a portion of a circular ring, of the first joint part (6a) projects at the end remote from the free end thereof perpendicularly from the stop face (17) of the first joint part (6a) and/or the free end of the receptacle (12) of the second joint part (6b) extends perpendicularly into the stop face (17) of the second joint part (6b).

9. An item of furniture according to any one of claims 2 to 8, **characterised in that** the first joint part (6a) and/or the second joint part (6b) comprises a curved or bent portion (21) between the fastening means (13) thereof and the sliding peg (11) thereof or between the fastening means (13) thereof and the receptacle (12) thereof.

10. An item of furniture according to any one of claims 1 to 9, **characterised in that** at least one of the two joint parts (6a, 6b) comprises a second fastening means (18), which is provided for, in particular adjustable, fastening of a further supporting element (9) of the item of furniture (1).

11. An item of furniture according to any one of claims 1 to 10, **characterised in that** the longitudinal axes (22) of the fastening means (13) of the two joint parts (6a, 6b) are arranged at an angle (γ) of at least 180°, in particular at an angle of between 180° and 225°, to one another when the joint parts (6a, 6b) are withdrawn fully from one another.

12. An item of furniture according to any one of claims 1 to 11, **characterised in that** it is formed of a folding chair, a folding lounger or a folding table, the joint (6) in particular connecting together swivellably two adjoining supporting elements (5) in the form of legs of the item of furniture (1).

## Revendications

1. Pièce de mobilier (1) rabattable équipée d'au moins deux éléments porteurs (5) reliés ensemble de façon à pouvoir pivoter à l'aide d'une articulation (6), l'articulation (6) comprenant une première partie d'articulation (6a) dotée d'au moins un tenon glissière (11) comportant une section transversale extérieure prenant la forme d'un détouré de couronne circulaire et l'articulation (6) comprenant une deuxième partie d'articulation (6b) dotée d'au moins un logement (12) comportant une section transversale intérieure pour l'essentiel complémentaire par rapport au tenon glissière (11) de la première partie d'articulation (6a), le tenon glissière (11) de la première partie d'articulation (6a) pouvant être déplacé par contact par frottement avec le logement (12) de la deuxième partie d'articulation (6b) en glissant dans le logement (12), la première partie d'articulation (6a) pouvant être entièrement sortie hors de la deuxième partie d'articulation (6b) de l'articulation (6), **caractérisée en ce que** la première partie d'articulation (6a) est protégée, avant un retrait complet hors de la deuxième partie d'articulation (6b), contre un entrechoquement les uns contre les autres des éléments porteurs (5) de la pièce de mobilier (1) y étant fixés, avant que la première partie d'articulation (6a) ne soit entièrement sortie de la deuxième partie d'articulation (6b).

2. Pièce de mobilier selon la revendication 1, **caractérisée en ce que** la première partie d'articulation (6a) et/ou la deuxième partie d'articulation (6b) comporte au niveau de son extrémité opposée au tenon glissière (11) et/ou au logement (12) un dispositif de fixation (13) réalisé pour fixer respectivement un des deux éléments porteurs (5) reliés ensemble de façon à pouvoir pivoter.

3. Pièce de mobilier selon la revendication 2, **caractérisée en ce que** le dispositif de fixation (13) comprend :
- soit un tenon de fixation (14) pouvant être introduit dans un profilé creux de l'élément porteur (5) respectif, ledit tenon étant notamment pourvu d'une surface (15) à frottement accru et/ou d'un dispositif d'arrêt ou de blocage entrant en interaction avec l'élément porteur (5) ;
- soit une douille de fixation pouvant être enfichée dans une extrémité pour l'essentiel en forme de tige de l'élément porteur respectif, ladite douille étant notamment pourvue d'une surface intérieure à frottement accru et/ou d'un dispositif d'arrêt ou de blocage entrant en interaction avec l'élément porteur.

4. Pièce de mobilier selon l'une quelconque des revendications 1 à 3, **caractérisée en ce que** la première partie d'articulation (6a) comprend une pluralité de tenons glissières (11) disposés côte à côte, séparés ou reliés par le biais d'étais transversaux (11a), lesdits tenons glissières pouvant être déplacés par contact par frottement dans une pluralité de logements (12) de la deuxième partie d'articulation (6b) ou dans un ou des logements (12) communs à un, plusieurs, ou la totalité des tenons glissières (11) de la deuxième partie d'articulation (6b).

5. Pièce de mobilier selon l'une quelconque des revendications 1 à 4, **caractérisée en ce que** la première partie d'articulation (6a) et la deuxième partie d'articulation (6b) sont respectivement réalisées d'un seul tenant, notamment sous la forme respective d'une pièce en métal moulé ou moulée par injection.

6. Pièce de mobilier selon l'une quelconque des revendications 1 à 5, **caractérisée en ce que** le tenon glissière (11) de la première partie d'articulation (6a) et/ou le logement (12) de la deuxième partie d'articulation (6b) s'étend autour d'un détouré de couronne circulaire avec un angle (β) compris entre 200 et 135°, notamment entre 35° et 135°, de préférence entre 50° et 135°.

7. Pièce de mobilier selon l'une quelconque des revendications 1 à 6, **caractérisée en ce que** l'extrémité du tenon glissière (11) opposée à l'extrémité libre du tenon glissière (11) de la première partie d'articulation (6a) et/ou l'extrémité libre du logement (12) de la deuxième partie d'articulation (6b) est/sont disposées contre une surface de butée (17) disposée perpendiculairement à l'axe de pivotement de l'articulation (6) servant de butée de la première partie d'articulation (6a) contre la deuxième partie d'articulation (6b) dans sa position entièrement rétractée.

8. Pièce de mobilier selon la revendication 7, **caractérisée en ce que** le tenon glissière (11) en forme de détouré de couronne circulaire de la première partie d'articulation (6a) ressort perpendiculairement à la surface de butée (17) de la première partie d'articulation (6a) au niveau de l'extrémité opposée à son extrémité libre et/ou que l'extrémité libre du logement (12) de la deuxième partie d'articulation (6b) s'étend perpendiculairement dans la surface de butée (17) de la deuxième partie d'articulation (6b).

9. Pièce de mobilier selon l'une quelconque des revendications 2 à 8, **caractérisée en ce que** la première partie d'articulation (6a) et/ou la deuxième partie d'articulation (6b) comporte une section courbée ou coudée (21) entre son dispositif de fixation (13) et son tenon glissière (11) et/ou entre son dispositif de fixation (13) et son logement (12).

10. Pièce de mobilier selon l'une quelconque des revendications 1 à 9, **caractérisée en ce qu'**au moins une des deux parties d'articulation (6a, 6b) comporte un deuxième dispositif de fixation (18) servant à fixer, notamment de façon réglable, un élément porteur (9) supplémentaire de la pièce de mobilier (1).

11. Pièce de mobilier selon l'une quelconque des revendications 1 à 10, **caractérisée en ce que** les axes longitudinaux (22) des dispositifs de fixation (13) des deux parties d'articulation (6a, 6b) sont disposés l'un par rapport à l'autre selon un angle (γ) d'au moins 180°, notamment selon un angle compris entre 180° et 225°, dans une position entièrement sortie des parties d'articulation (6a, 6b) l'une par rapport à l'autre.

12. Pièce de mobilier selon l'une quelconque des revendications 1 à 11, **caractérisée en ce qu'**elle est formée par une chaise rabattable, notamment par une couchette rabattable ou une table rabattable, l'articulation (6) reliant notamment de façon pivotante deux éléments porteurs (5) de la pièce de mobilier (1) connexes réalisés sous la forme de pieds.
